(19)

Europäisches
Patentamt
European
Patent Office
Office européen
des brevets

(11) **EP 4 579 361 A1**

(12) **EUROPEAN PATENT APPLICATION**

(43) Date of publication:
**02.07.2025 Bulletin 2025/27**

(21) Application number: **23461706.6**

(22) Date of filing: **29.12.2023**

(51) International Patent Classification (IPC):
**G05B 19/042** $^{(2006.01)}$ **G05B 19/418** $^{(2006.01)}$
**G05B 23/02** $^{(2006.01)}$

(52) Cooperative Patent Classification (CPC):
**G05B 19/0428; G05B 19/4184; G05B 23/0235**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **DTP spólka z ograniczona
odpowiedzialnoscia
66-002 Zielona Góra (PL)**

(72) Inventors:
• **Bojarski, Jacek
66-015 Zielona Gora (PL)**
• **Antkiewicz, Daniel
66-620 Gubin (PL)**
• **Apanasewicz, Bartosz
65-012 Zielona Gora (PL)**

• **Dyderski, Adrian
68-113 Brzeznica (PL)**
• **Dylewski, Robert
66-003 Przytok (PL)**
• **Mroczkowska, Anna
66-006 Zielona Gora (PL)**
• **Niedziela, Maciej
66-002 Zielona Gora (PL)**
• **Trochanowski, Daniel
59-300 Lubin (PL)**
• **Tswigun, Eugeniusz
65-119 Zielona Gora (PL)**
• **Wojciech, Magdalena
65-374 Zielona Gora (PL)**

(74) Representative: **Kancelaria Eupatent.pl Sp. z.o.o
Ul. Kilinskiego 185
90-348 Lodz (PL)**

(54) **A METHOD FOR DETECTING ANOMALIES IN DISCRETE SEQUENTIAL PRODUCTION
PROCESSES**

(57) A computer-implemented method for detecting anomalies in serial discrete production processes, the method comprising the steps of: determining (701) the beginning and end of the cycle; identifying (702) reference signals and sorting them according to the start times of their operating states; estimating (703) the characteristics of tested signals and pairs of tested signals for the reference cycle; determining (704) the sequence and containment relationships for pairs of reference signals; comparing (705) the characteristics of the signals and signal pairs of the test cycle with the characteristics of the signals and signal pairs of the reference cycle; inferring (706) the probable causes of cause-and-effect anomalies based on a database of patterns of possible causes of deviations between the reference and test characteristics of sensor pairs; and presenting (707) information about the detected anomaly.

Fig. 7

**Description**

TECHNICAL FIELD

The present invention relates to detecting anomalies in discrete sequential production processes. In particular, it relates to production lines maintenance, in particular to detecting anomalous, deviating from expected performance of a production machinery. Such anomalies may indicate a progressing degradation of one or more machine components, which may lead to a machine failure. Another area, where anomaly detection can be applied, is identification of malfunctioning device or component in a complex production system.

BACKGROUND

Detecting anomalies in functioning of machines in a production system is an issue of utmost importance for maintenance of such systems. Typically, the issue is solved by introduction of additional sensors (temperature, vibration, tension, etc.) that monitor respective parameters of the working machine. An example of such an approach is a vibration sensor installed on an engine body. While working, an engine has a specific range of vibrations that is considered regular. When vibrations fall beyond such range, it indicates a dysregulation or damage of the engine, or some component connected to it. Another example is a use of temperature sensor. Unusual increase of temperature during the activity of the engine may indicate an increase of the load, thus a problem with the engine or connected devices.

However, adding sensors to a machine is not always possible due to limited access to desired location or the cost of sensors themselves. Moreover, such a solution is strictly unique for an individual machine and its work conditions. An alternative solution, which does not require additional sensors, is based on analysis of signals from actuators and sensors that are already available in the machine via PLC controllers that control the activity of the machine. Such a solution is presented in document US 2015/0277416. All events, i.e. changes of values of binary signals collected from PLCs of the machine are recorded in a database. Then, a table of relations between those events is created. Anomalies are detected by comparing sequences of events on a signal with reference sequences and then, verification of the task execution time recorded in the relations table vis-a-vis a reference time. However, no relationships between signals nor cycles in which events appear are taken into account.

SUMMARY

There is a need to solve a technical problem related to identification of current or future places of malfunctions in industrial machines on production lines without adding any extra sensors, but instead by analysis of cycles and mutual relationships of pairs of binary signals from PLC controllers of such machines.

In the present invention, similarly to the solution known from the prior art, anomalies of the working of an industrial machine are identified by analysing binary signals taken from PLC controllers. However, the present invention applies a different analysis method. It is based on comparative reasoning of state changes of signals within a work cycle and analysis of relationships between pairs of signals. Such an approach not only allows avoiding the need for additional sensors, but also can be applied to arbitrary machines (as long as they are controlled by PLCs) even without any knowledge of their characteristics or work conditions. The method is applicable to machines working in a sequential mode, where individual operations performed by the machine are executed one by one.

In one aspect, the invention relates to a computer-implemented method for detecting anomalies in serial discrete production processes. The method involves determining the beginning and end of a cycle, identifying reference signals, estimating characteristics of tested signals and signal pairs for the reference cycle, determining sequence and containment relationships for pairs of reference signals, comparing characteristics of test cycle signals with reference cycle signals, inferring probable causes of anomalies, and presenting information about detected anomalies.

The comparison of characteristics can be based on comparing numerical values of time parameters with an assumed tolerance margin. This approach provides the technical advantage of simplifying the comparison process and potentially reducing computational complexity.

The comparison of characteristics can be also based on statistical tests. This embodiment offers the technical advantage of a more robust analysis that can account for variability and uncertainty in the data.

A preferred embodiment includes the analysis of start-end cycle signals from PLC controllers for determining the beginning and end of the cycle. This feature provides the technical advantage of accurately capturing the cycle timing, which is critical for anomaly detection.

Estimating characteristics of tested signals may include calculating average durations of standby, active, and rest states within the cycle. This offers the technical advantage of establishing a baseline for normal operation against which anomalies can be detected.

The method may comprise constructing directed graphs to determine sequence and containment relationships for pairs of reference signals. This approach provides the technical advantage of visualizing and understanding the interdependencies between signals, which is essential for accurate anomaly detection.

The method may use an inference algorithm to analyze changes in signal state durations and examine relationships between signals for inferring probable causes of anomalies. This feature offers the technical advantage of a systematic approach to diagnosing the root causes of detected anomalies.

The method may include recording identified anomalies in a change table with details about the signal pair, relationship type, registered changes, and descriptions of the cause and effect of the disorder. This embodiment provides the technical advantage of creating a comprehensive record of anomalies for future reference and analysis.

The method may comprise updating the database of reference signal characteristics after each change in the production process. This feature offers the technical advantage of maintaining the accuracy and relevance of the anomaly detection system over time.

The invention also relates to a computer program and a computer-readable medium, each comprising program code instructions for performing the steps of the method when executed on a computer.

In yet another aspect, the invention relates to a system for detecting anomalies in one or more production machines, comprising a data analysis computer connected to PLC controllers and configured to operate according to the method presented herein.

BRIEF DESCRIPTION OF DRAWINGS

The present invention is shown by means of example embodiments on a drawing, wherein:

Fig. 1 shows a schematic representation of an industrial machine for which the method is aimed;
Fig. 2 shows basic parameters of a cycle and a signal within a cycle;
Fig. 3 shows a containing relation of signals within a cycle;
Fig. 4 shows a consequence relation of signals within a cycle;
Figs. 5a, 5b show an exemplary machine;
Fig. 6 shows signals of an exemplary machine;

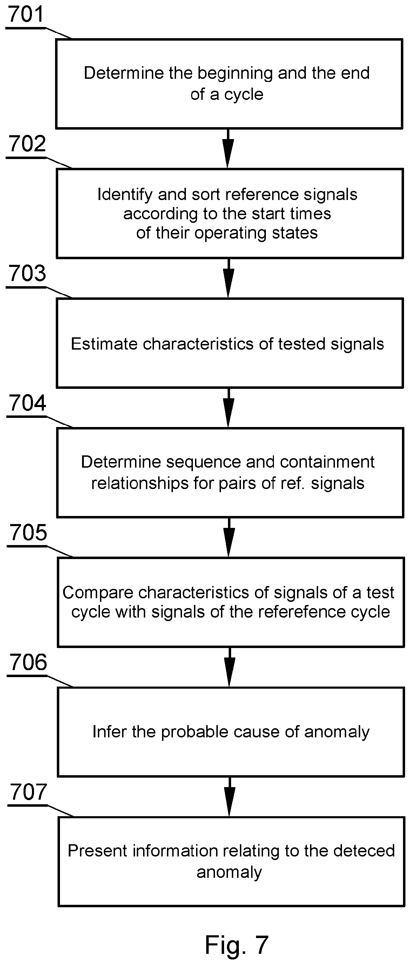

Fig. 7 shows steps of a method for detecting anomalies in serial discrete production processes;
Fig. 8 shows a flow diagram of an inference algorithm;
Fig. 9 shows steps of an initial stage for creating a database of reference signal characteristics.

DETAILED DESCRIPTION OF EMBODIMENTS

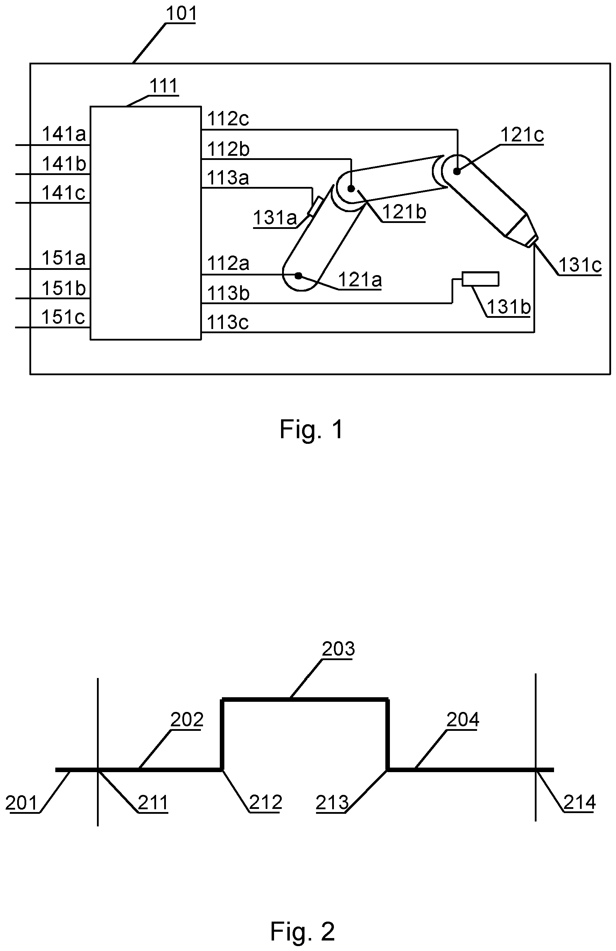

The industrial machine for which the method of the invention is aimed, is schematically presented in Fig. 1. The machine comprises at least one device, module, or submodule (101) and is utilized for the manufacturing or treatment of industrial products. Machines are typically controlled and programmed automatically using programmable logic controllers (PLCs) (111). These controllers send signals (112a, 112b, 112c) to the machine's actuators (121a, 121b, 121c) and read logical information (113a, 113b, 113c) about events (e.g., whether an actuator has reached the set position). Sensors and groups of sensors (131a, 131b, 131c) will be hereinafter collectively referred to as sensors. Information read from sensors or control program elements, which are described by a binary value that determines the current state of the machine, will be referred to as a signal.

Signals 141a, 141b, 141c, 151a, 151b, 151c are read from the PLC controller and are binary. Their values reflect activities and their changes over time.

Information is received continuously (or in batches) from the PLC, which can be transformed into a sequence of triplets $(\alpha, t, s)$, wherein:

- $\alpha$ denotes a signal identifier (ID),
- $t$ denotes the moment of the change of the state of signal $\alpha$,
- $s$ denotes the state of the signal $\alpha$ after the change at the time $t$.

The signal state is a discrete time function indexed by a signal ID with values 0 or 1, which can be written as $s_\alpha(t)$.

The production cycle is defined as the time required to perform a specific production task on the considered industrial machine (production cell/set of machines), expressed in units of time (year/month/day/hour/minute/second). It may involve simple or complex tasks of producing a single product (semi-finished product, element). The production cycle is presented as the period between the beginning and the end of the production process of a single product on a given machine, during which the material (or raw material) is introduced into production and subjected to subsequent processing operations. The production cycle is a key element in planning production processes and analyzing machine operation, especially in detecting anomalies according to the presented solution. An anomaly in machine operation is defined as a deviation from the assumed mode of operation. In the solution according to the invention, anomalies are detected by analyzing changes in the measured test signal, where disturbances manifest as changes in signal states relative to the standard (reference) signal.

It is assumed that the set of observed signals from the PLC includes those that can determine the beginning and end of the work cycle. These signals are referred to as start-end cycle signals in the subsequent description.

Signals that change their state twice during a single cycle are analysed. Fig. 2 shows the key parameters of the cycle and the signal within the cycle. In each cycle a signal $s_\alpha(t)$ (201) can be in one of three states:

- standby state 202,
- active or operating state 203,
- rest state 204.

In the case of a signal that changes its state more than twice during a single cycle, it is decomposed into a group of signals with characteristics consistent with the description above.

Each cycle has a defined beginning $t_{start}$ (211) and end $t_{end}$ (214). The moment of signal change within a specific cycle is marked as:

- $t_1(\alpha)$ denotes moment of transition of the signal $\alpha$ from standby to active state 212,
- $t_2(\alpha)$ denotes moment of transition of the signal $\alpha$ from active to rest state 213.

Additionally for every signal $\alpha$ the duration of individual states of this signal in the cycle is calculated:

- $T_0(\alpha) = t_1(\alpha) - t_{start}$ denotes a standby state duration, and $[t_{start}, t_1(\alpha))$ is referred to as a standby interval,
- $T_1(\alpha) = t_2(\alpha) - t_1(\alpha)$ denotes active state duration, and $[t_1(\alpha), t_2(\alpha))$ is referred to as an active interval,
- $T_2(\alpha) = t_{end} - t_2(\alpha)$ denotes rest state duration and $[t_2(\alpha), t_{end})$ is referred to as a rest interval.

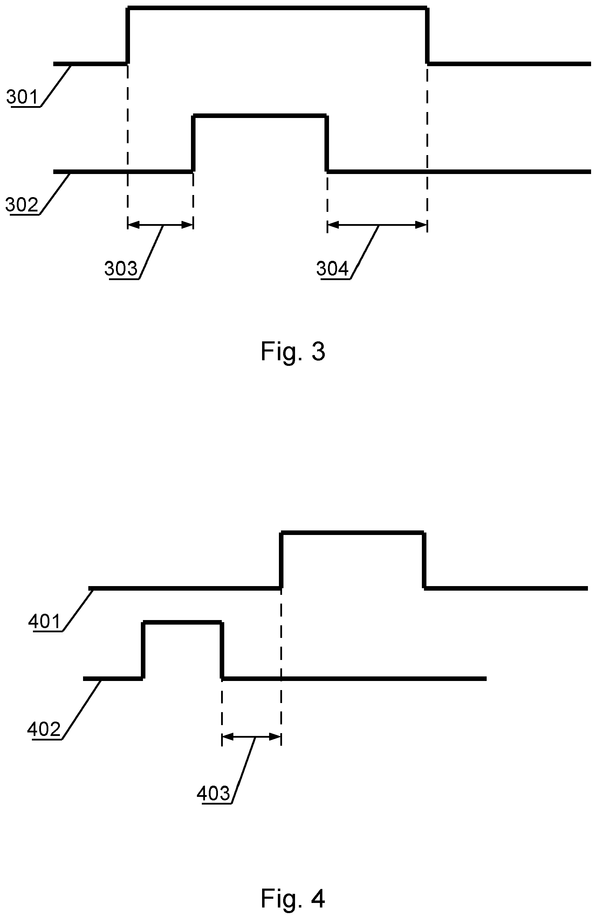

Two signals may be in one of two relationships to each other, defined below and illustrated in Fig. 3 and 4.

The containing relation $\subseteq$ (Fig. 3) in a specific cycle occurs when the operating state of one of the signals (301) begins no later and ends no earlier than the operating state of the other signal (302)

$$s_\alpha \subseteq s_\beta \iff t_1(\beta) \leq t_1(\alpha) \land t_2(\alpha) \leq t_2(\beta).$$

Consequence relation $\leq$ (Fig. 4) in a specific cycle occurs when the operating state of the signals (401) begins no earlier than the end of the operating state of the other signal (402)

$$s_\alpha \leq s_\beta \iff t_2(\alpha) \leq t_1(\beta).$$

In addition, the following designations are used for further analysis:

- $D_1(\alpha,\beta) = t_1(\alpha) - t_1(\beta)$ denotes a time between the beginnings of operating states of signals $s_\alpha$ and $s_\beta$ in containing relation ($s_\alpha \subseteq s_\beta$) (303),
- $D_2(\alpha,\beta) = t_2(\beta) - t_2(\alpha)$ denotes a time between the ends of operating states of signals $s_\alpha$ and $s_\beta$ in containing relation ($s_\alpha \subseteq s_\beta$) (304),
- $D(\alpha,\beta) = t_1(\beta) - t_2(\alpha)$ denotes a time between operating states of signals $s_\alpha$ and $s_\beta$ in consequence relation ($s_\alpha \leq s_\beta$) (403).

The set of reference signals (RS) includes a signal that meets each of the following conditions:

- it does not belong to the set of start-end signals;
- in each cycle, the signal state at the beginning is the same as at the end;
- the number of signal state changes is the same in each cycle;
- in each cycle, the relationship of this signal to every other signal in the RS set is of the same type.

Anomaly identification is carried out in two main stages. The first is to build a database of reference signal characteristics based on the model (reference) period of the production process and to remember the start-end signals of the            cycle.            These            characteristics            are            marked            as

$$T_0^{ref}(\alpha),\ T_1^{ref}(\alpha),\ T_2^{ref}(\alpha),\ D^{ref}(\alpha, \beta),\ D_1^{ref}(\alpha, \beta),\ D_2^{ref}(\alpha, \beta)$$

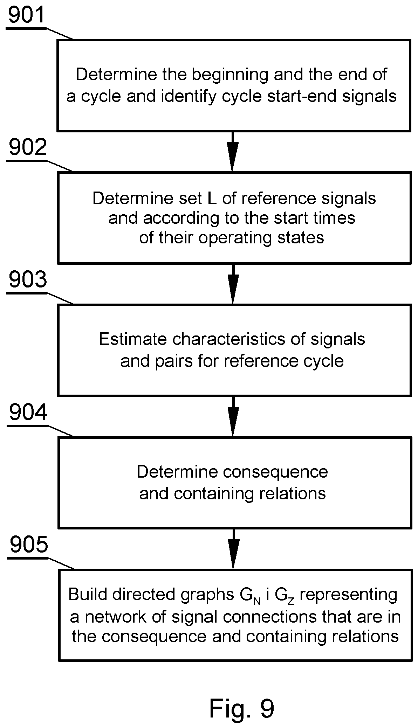

Initially, information is gathered from a sample production process over a specific time frame. Based on this information, the following steps should be performed (see Fig. 9):

- step 901 - determine the beginning and end of the cycle and identify cycle start-end signals;
- step 902 - determine the set L of reference signals according to the start times of their operating states;
- step 903 - estimate the characteristics of signals and signal pairs for the reference cycle;
- step 904 - determine the consequence and containment relations;
- step 905 - build directed graphs $G_n$ and $G_z$ representing a network of signal connections that are in the consequence and containment relations, respectively.

The reference cycle is a cycle composed of at least 1 observed cycle during the reference period of the production process. The reference cycle times and the signal characteristics of such a cycle are determined by estimating the average times $t_{end}$, $t_1(\alpha)$, $t_2(\alpha)$, $T_0(\alpha)$, $T_1(\alpha)$, $T_2(\alpha)$, $D(\alpha, \beta)$, $D_1(\alpha, \beta)$, $D_2(\alpha, \beta)$, where $t_{start} = 0$. The estimation method depends on the nature of the variability of the characteristics. For characteristics with low variability, it is preferable to use the arithmetic mean.

In the graph model, signals are represented by the vertices of the graph. In a graph for a consequence relation, the edge is directed away from the vertex, the predecessor denoting the signal ($s_\alpha$), whose operating state began directly before the beginning of the of the operating state of signal ($s_\beta$) being its successor. In a graph for a containing relation, the edge is directed away from the vertex, the predecessor denoting the signal ($s_\alpha$), whose operating state began directly after the beginning of the operating state of signal ($s_\beta$) being its successor.

In the second, main stage, the characteristics of the reference signals indicated in the first stage are calculated continuously or randomly. The calculated characteristics are subjected to a verification process to detect anomalies. After each change in the production process, the process of building a database of reference signal characteristics should be repeated.

In the main stage, the characteristics of the signals and signal pairs of the tested cycle are compared with the characteristics of the signals and signal pairs of the reference cycle. The characteristics of the signals and signal pairs of the test cycle are estimated in the same way as the characteristics of the signals and signal pairs of the reference cycle. The method of comparing characteristics can be simple, i.e. based on comparing numerical values taking into account the assumed tolerance margin, or complex using statistical tests.

The transition to the inference stage occurs if there is at least one difference between the reference and tested characteristics.

Inferring the causality and effects of an emerging disorder is based on analyzing changes in the durations of specific signal states (standby, active, and rest) and examining the relationships between these signals as defined above. Controlling potential changes between the start and end times of the working states of two signals in a direct containment relation, and the time between the working states of signals in a direct consequence relation, is also crucial.

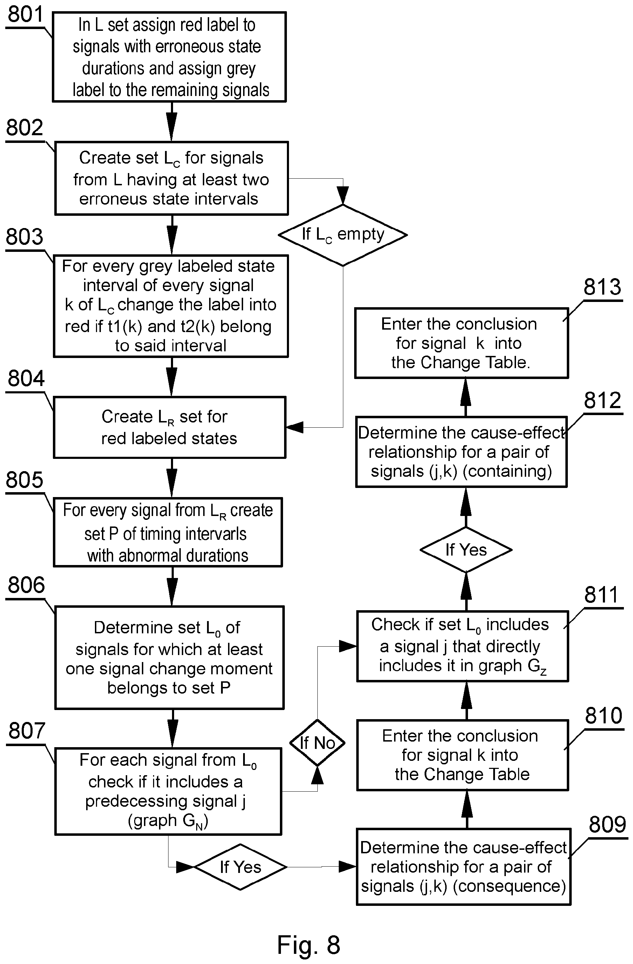

The inference algorithm includes the following steps, as summarized in Fig. 8.

**Stage 1:** Determining the set:

In step 801, for each signal in the set *L*, assign a 'red' label to those state intervals whose durations are significantly different from the reference durations, and a 'grey' label to the remaining state intervals.

In step 802, in the set $L_C$, record those signals of the set *L*, that have at least two state intervals with the 'red' label and wherein one has a duration significantly longer than the reference duration and another has a duration significantly shorter than the reference duration

Following step 802, if the set $L_C$ is empty, proceed to step 804.

Otherwise, in step 803, for every signal *k* of the set $L_C$ perform the following: change the label to 'red' for every state interval with the 'grey' label, if $t_1(k)$ and $t_2(k)$ belong to this interval.

In step 804, Assign all states which contain at least one state interval with the 'red' label to the set $L_R$.

In step 805, for every signal in the set $L_R$ create a set $P_i$ of state intervals based on state durations. Create a set *P* that is the common part of the sets $P_i$ of state intervals of all signals, for which the durations of at least one state has changed significantly.

**Stage 2:** In step 806, determine the set $L_0 \subseteq L$ of signals for which at least one moment of signal change belongs to the set *P*.

**Stage 3:** For each signal $k$ of the set $L_0$ perform the following:

In step 807, check if the set $L_0$ includes a signal $j$, that is its direct predecessor in the graph for consequence relation $G_n$. If so, then:

a) in step 809, determine the cause-effect relationship for a pair of signals $(j, k)$ based on inference for consequence relation.
b) in step 810, enter the conclusion for signal $k$ into the Change Table.

In step 811, check if the set $L_0$ includes a signal $j$, that directly includes it in the graph for containing relation $G_z$. If so, then:

a) in step 812, determine the cause-effect relationship for a pair of signals $(j, k)$ based on inference for containing relation.
b) in step 813, enter the conclusion for signal k into the Change Table.

The Change Table contains the results collected at the application stage, including:

- identifier of signal pair,
- the type of relationship between them,
- registered changes,
- description of the cause of the disorder,
- description of the effect of the disorder.

The following notations are used in the inference rules:

$T_i(\alpha)|Z$ denotes observed change of the duration of a state $i$, $i = 0,1,2$, of the signal $\alpha$,
$T_i(\alpha)|Zv$ denotes a change (increase, decrease or no change) of the duration of a state $i$, $i = 0,1,2$, of the signal $\alpha$ by the

value $v = T_i(\alpha) - T_i^{ref}(\alpha)$,

$Z|[0, t_1(\alpha))$ denotes that the observed change occurred before the active state of signal $\alpha$,
$Z|[t_2(\alpha), T)$ denotes that the observed change occurred after the active state of signal $\alpha$, $D(\alpha, \beta)|Z$ denotes observed change in quantity $D(\alpha, \beta)$,
$D(\alpha, \beta)|Zv$ denotes observed change in quantity $D(\alpha, \beta)$ by the value $v = D(\alpha, \beta) - D^{ref}(\alpha, \beta)$,
$D_i(\alpha, \beta)|Z$ denotes observed change in quantity $D_i(\alpha, \beta)$, $i = 1,2$,

$D_i(\alpha, \beta)|Zv$ denotes observed change in quantity $D_i(\alpha, \beta)$, $i = 1,2$, by the value $v = D_i(\alpha,\beta) - D_i^{ref}(\alpha,\beta)$.

Examples of inference rules for pairs of signals $s_\alpha$ and $s_\beta$ in a direct containing relation $s_\alpha \subseteq s_\beta$:

- If a change in the duration of rest states of both signals is observed, i.e. $T_2(\alpha)|Z$ and $T_2(\beta)|Z$, then the containing relation of those signals shows that the cause of the changes is a disturbance that occurred after the operating state of the signal $s_\beta$, i.e. $Z|[t_2(\beta), T)$.
- If a change in the duration of standby states of both signals is observed, i.e. $T_0(\alpha)|Z$ and $T_0(\beta)|Z$, then the containing relation of those signals shows that the cause of the changes is a disturbance that occurred before the operating state of the signal $s_\beta$, i.e. $Z|[0, t_1(\beta))$.
- If a change in the duration of operating state of both signals is observed, i.e. $T_1(\alpha)|Z$ and $T_1(\beta)|Z$, then the containing relation of those signals shows that the cause of the changes is a change of the duration of the operating state $T_1(\alpha)$ of

signal $s_\alpha$: $T_1(\alpha)|Zv$ by the value $v = T_1(\alpha) - T_1^{ref}(\alpha)$. This disturbance results in the change of the duration of operating state $T_1(\beta)$ of the signal $s_\beta$ by the same value $v$.
- If a change in the duration of $D_1(\alpha, \beta)|Z$, $T_0(\alpha)|Z$ and $T_1(\beta)|Z$ is observed, then the containing relation of those signals shows that the cause of the disturbances is a change of the duration $D_1(\alpha, \beta)|Zv$ by

$v = D_1(\alpha, \beta) - D_1^{ref}(\alpha, \beta)$. It results in a change of duration of the operating state $T_1(\beta)$ of the signal $s_\beta$ and the standby state $T_0(\alpha)$ of the signal $s_\alpha$ by the same value $v$.
- If a change in the duration of $D_2(\alpha, \beta)|Z$, $T_1(\beta)|Z$ and $T_2(\alpha)|Z$ is observed, then the containing relation of those signals shows that the cause of the disturbances is a change of the duration $D_2(\alpha, \beta)|Zv$ by

$$v = D_2(\alpha, \beta) - D_2^{ref}(\alpha, \beta)$$ . It results in a change of duration of the operating state $T_1(\beta)$ of the signal $s_\beta$ and the rest state $T_2(\alpha)$ of signal $s_\alpha$ by the same vale $v$.

Examples of inference rules for pairs of signals $s_\alpha$ and $s_\beta$ in a direct consequence relation $s_\alpha \leq s_\beta$:

- If a change in the duration of rest states of both signals is observed, i.e. $T_2(\alpha)|Z$ and $T_2(\beta)|Z$, then the consequence relation of those signals shows that the cause of the changes is a disturbance that occurred after the operating state of the signal $s_\beta$, i.e. $Z|[t_2(\beta), T)$.
- If a change in the duration of the standby states of both signals is observed, i.e. $T_0(\alpha)|Z$ and $T_0(\beta)|Z$, then the consequence relation of those signals shows that the cause of the changes is a disturbance before the operating state of the signal $s_\alpha$, i.e. $Z|[0, t_1(\alpha))$.
- If a change in the duration of the rest state of the signal $s_\alpha$ and of the operating state of the signal $s_\beta$, i.e. $T_2(\alpha)|Z$ and $T_1(\beta)|Z$ is observed, then the consequence relation of those signals shows that the cause of the disturbances is a change in the duration of the operating state $T_1(\beta)$ of the signal $s_\beta$, i.e. $T_1(\beta)|Zv$ by $v = T_1(\beta) - T_1^{ref}(\beta)$ . This results in the change of the duration of the rest state $T_2(\alpha)$ of the signal $s_\alpha$ by the same value $v$.
- If a change in the duration of the operating state of the signal $s_\alpha$ and the standby state of the signal $s_\beta$, i.e. $T_1(\alpha)|Z$ and $T_0(\beta)|Z$ is observed, then the consequence relation of those signals shows that the cause of the disturbances is a change of the duration of operating state $T_1(\alpha)$ of the signal $s_\alpha$, i.e. $T_1(\alpha)|Zv$ by $v = T_1(\alpha) - T_1^{ref}(\alpha)$ . This results in the change of the duration of the standby state $T_0(\beta)$ of the signal $s_\beta$ by the same value $v$.
- If a change in the duration of $D(\alpha, \beta)|Z$, $T_2(\alpha)|Z$ and $T_0(\beta)|Z$ is observed, then the consequence relation of those signals shows that the cause of the disturbance is a change of $D(\alpha, \beta)|Zv$ by $v = D(\alpha, \beta) - D^{ref}(\alpha, \beta)$. This results in a change of both the duration of the standby state $T_0(\beta)$ of the signal $s_\beta$ as well as the duration of the rest state $T_2(\alpha)$ of the signal $s_\alpha$ by the same value $v$.

Other constellations of disturbances are combinations of the above examples.

EXAMPLE OF APPLICATION OF THE INVENTION

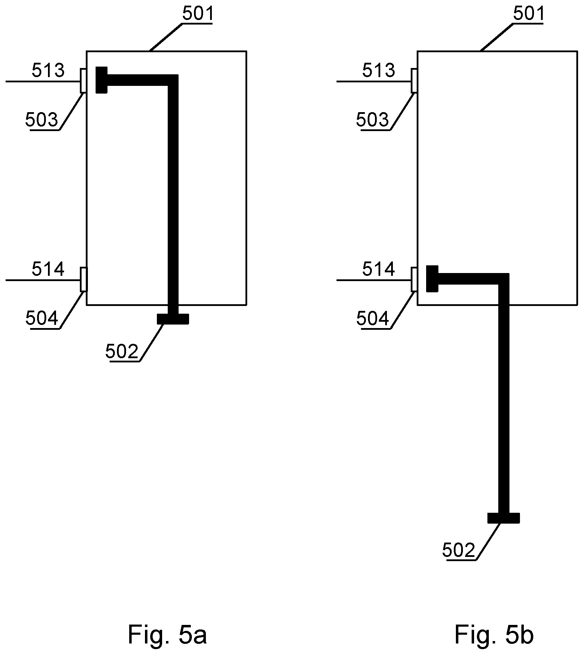

Figs. 5a and 5b symbolically show the operation of the actuator 501, which is characterized by certain assumptions, including the established working position (Fig. 5b) and resting, i.e. home position (Fig. 5a) of the piston 502. This information is defined and then checked using corresponding binary signals: signal $s_\alpha$ (513) from the sensor of home position 503 and signal $s_\beta$ (514) from the sensor of working position 504.

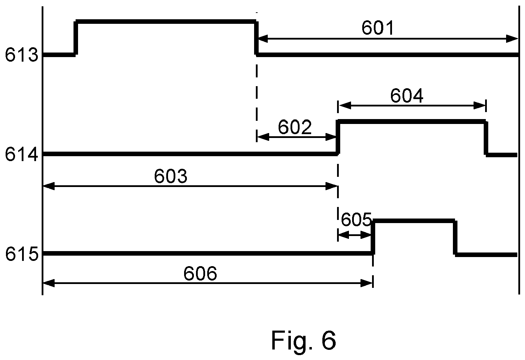

After the signal initiating the actuator operation occurs, it should be controlled, i.e. a change in position, e.g. from the home position to the working position of the actuator, which will be reflected in the change in the signal values of the appropriate sensors. Under normal, undisturbed working conditions, changing positions should take a certain transition time $D(\alpha, \beta)$ (602) from the moment of changing the value of signal $s_\alpha$ (613) from the state 1 to 0 to change of the value of signal $s_\beta$ (614) from state 0 to 1 (Fig. 6). If, at the stage of monitoring the operation of the machine, including the actuator given in the example, the mentioned transition time (602) changes by an amount $v$, the developed method will register such a case in the Change Table and based on the inference rules for the consequence relationship $s_\alpha \leq s_\beta$ will show consequences of the anomaly, i.e. changes of the duration of rest time 601) of signal $s_\alpha$ (613) and change of the duration of the standby time 603) of signal $s_\beta$ (614) by the same value $v$. At the same time, the time interval in which the disturbance occurred will be indicated and the cause of the disturbance, which was a change in the transition time, will be recorded (602).

We assume that during the working position of the actuator (504), a certain machining process begins (e.g. making a weld connecting production elements), which can be defined by intermediate signals that must occur during the process (e.g. information about welding points, subsequent gluing paths of parts, welding paths and many other interdependent information). Only after the processing process has been completed, which is represented by the signal $s_\gamma$ (615), the actuator may return to its home position. Due to the consequences of containing relation $s_\gamma \subseteq s_\beta$ and disturbance of the standby time of signal $s_\beta$, Change Table will record also a change of standby time (606) of signal $s_\beta$ by the same value $v$. Ultimately in the system of those three exemplary signals the algorithm will point out signal $s_\beta$ as the cause of the anomaly, as well as the time interval when such anomaly occurred: the interval before the actuator reaches the operating position but after the completion of operating state of signal $s_\alpha$.

# EP 4 579 361 A1

**Claims**

1. A computer-implemented method for detecting anomalies in serial discrete production processes, the method comprising the steps of:

   - determining (701) the beginning and end of the cycle;
   - identifying (702) reference signals and sorting them according to the start times of their operating states;
   - estimating (703) the characteristics of tested signals and pairs of tested signals for the reference cycle;
   - determining (704) the sequence and containment relationships for pairs of reference signals;
   - comparing (705) the characteristics of the signals and signal pairs of the test cycle with the characteristics of the signals and signal pairs of the reference cycle;
   - inferring (706) the probable causes of cause-and-effect anomalies based on a database of patterns of possible causes of deviations between the reference and test characteristics of sensor pairs;
   - presenting (707) information about the detected anomaly.

2. The method according to claim 1, wherein the comparison of characteristics is based on comparing the numerical values of time parameters taking into account the assumed tolerance margin.

3. The method according to claim 1, wherein the comparison of characteristics is based on statistical tests.

4. The method according to any of previous claims, wherein the determining of the beginning and end of the cycle (701) includes the analysis of start-end cycle signals from the PLC controllers.

5. The method according to any of previous claims, wherein the step of estimating the characteristics of tested signals and pairs of tested signals for the reference cycle (703) includes calculating the average durations of standby, active, and rest states of the signals within the cycle.

6. The method according to any of previous claims, wherein the step of determining the sequence and containment relationships for pairs of reference signals (704) includes the construction of directed graphs representing networks of signal connections.

7. The method according to any of previous claims, wherein the inferring of the probable causes of cause-and-effect anomalies (706) includes the use of an inference algorithm that analyzes changes in signal state durations and examines the relationships between signals.

8. The method according to any of previous claims, wherein the step of presenting information about the detected anomaly (707) includes recording the identified anomalies in a change table that contains details about the signal pair, the type of relationship, registered changes, and descriptions of the cause and effect of the disorder.

9. The method according to any of previous claims, further comprising a step of updating the database of reference signal characteristics after each change in the production process to maintain the accuracy of the anomaly detection system.

10. A computer program comprising program code instructions for performing all steps of the computer-implemented method according to any one of claims 1 to 9 when said program is run on the computer.

11. A computer-readable medium storing computer-executable instructions for performing all steps of the computer-implemented method of any one of claims 1 to 9 when executed on the computer.

12. A system for detecting anomalies in one or more production machines, comprising a data analysis computer connected to PLC controllers and configured to operate according to the method of any one of claims 1 to 9.

101

111

141a
141b
141c

151a
151b
151c

112c
112b
113a

131a

112a
113b
113c

121c

121b

121a

131c

131b

**Fig. 1**

203

202

204

201

211

212

213

214

**Fig. 2**

Fig. 3

Fig. 4

Fig. 5a

Fig. 5b

Fig. 6

701

Determine the beginning and the end
of a cycle

702

Identify and sort reference signals
according to the start times
of their operating states

703

Estimate characteristics of tested signals

704

Determine sequence and containment
relationships for pairs of ref. signals

705

Compare characteristics of signals of a test
cycle with signals of the referefence cycle

706

Infer the probable cause of anomaly

707

Present information relating to the deteced
anomaly

Fig. 7

**801** In L set assign red label to signals with erroneous state durations and assign grey label to the remaining signals

**802** Create set $L_c$ for signals from L having at least two erroneus state intervals

**If $L_c$ empty**

**803** For every grey labeled state interval of every signal k of $L_c$ change the label into red if t1(k) and t2(k) belong to said interval

**804** Create $L_R$ set for red labeled states

**805** For every signal from $L_R$ create set P of timing intervarls with abnormal durations

**806** Determine set $L_0$ of signals for which at least one signal change moment belongs to set P

**807** For each signal from $L_0$ check if it includes a predecessing signal j (graph $G_N$)

**If Yes**

**809** Determine the cause-effect relationship for a pair of signals (j,k) (consequence)

**810** Enter the conclusion for signal k into the Change Table

**811** Check if set $L_0$ includes a signal j that directly includes it in graph $G_z$

**If No**

**If Yes**

**812** Determine the cause-effect relationship for a pair of signals (j,k) (containing)

**813** Enter the conclusion for signal k into the Change Table.

Fig. 8

**901**

Determine the beginning and the end of
a cycle and identify cycle start-end signals

**902**

Determine set L of reference signals
and according to the start times
of their operating states

**903**

Estimate characteristics of signals
and pairs for reference cycle

**904**

Determine consequence
and containing relations

**905**

Build directed graphs $G_N$ i $G_Z$ representing
a network of signal connections that are in
the consequence and containing relations

Fig. 9

| | Europäisches Patentamt European Patent Office Office européen des brevets | **EUROPEAN SEARCH REPORT** | **Application Number** EP 23 46 1706 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/339662 A1 (IPPOLITO MASSIMO [IT]) 7 November 2019 (2019-11-07) | 1-12 | INV. G05B19/042 |
| Y | * paragraphs [0002] - [0005], [0013], [0019] - [0058], [0074] - [0076], [0090] - [0157]; figures 1A, 2 * | 2,3,8,9 | G05B19/418 G05B23/02 |
| | ----- | | |
| Y | US 2019/302707 A1 (GUO JIANLIN [US] ET AL) 3 October 2019 (2019-10-03) * paragraphs [0001], [0010] - [0025], [0040] - [0042], [0063], [0073] - [0099]; figures 1,4B, 8A, 8B * | 2,3 | |
| | ----- | | |
| Y | US 5 893 047 A (GIMBLETT CHRISTOPHER FRANCIS [GB] ET AL) 6 April 1999 (1999-04-06) * column 1, line 3 - line 63 * * column 2, line 65 - column 12, line 34 * | 8,9 | |
| | ----- | | |

TECHNICAL FIELDS
SEARCHED      (IPC)

G05B

The present search report has been drawn up for all claims

| Place of search | Date of completion of the search | Examiner |
|---|---|---|
| Munich | 17 May 2024 | Postemer, Patricia |

EPO FORM 1503 03.82 (P04C01)

## ANNEX TO THE EUROPEAN SEARCH REPORT
## ON EUROPEAN PATENT APPLICATION NO.

EP 23 46 1706

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | Publication date | Patent family member(s) | | Publication date |
|---|---|---|---|---|
| US 2019339662 A1 | 07-11-2019 | CA | 3041261 A1 | 04-11-2019 |
| | | CN | 110442075 A | 12-11-2019 |
| | | EP | 3564768 A1 | 06-11-2019 |
| | | PL | 3564768 T3 | 25-04-2022 |
| | | US | 2019339662 A1 | 07-11-2019 |
| US 2019302707 A1 | 03-10-2019 | CN | 111902781 A | 06-11-2020 |
| | | EP | 3776113 A1 | 17-02-2021 |
| | | JP | 7012871 B2 | 28-01-2022 |
| | | JP | 2021509995 A | 08-04-2021 |
| | | TW | 201942695 A | 01-11-2019 |
| | | US | 2019302707 A1 | 03-10-2019 |
| | | WO | 2019187297 A1 | 03-10-2019 |
| US 5893047 A | 06-04-1999 | EP | 0740805 A1 | 06-11-1996 |
| | | GB | 2285700 A | 19-07-1995 |
| | | JP | H09507597 A | 29-07-1997 |
| | | US | 5893047 A | 06-04-1999 |
| | | WO | 9519589 A1 | 20-07-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150277416 A